# EUROPEAN PATENT APPLICATION

(11) **EP 2 023 010 A1**
(43) Date of publication of application: **11.02.2009**
(21) Application number: 06805190.3
(22) Date of filing: 09.11.2006
(51) Int. Cl.: F16H 25/20, F16H 25/24, B25B 1/10

(54) **ADJUSTING DISTANCE'S DEVICE USING RESILIENTLY LEAD SCREW AUTOMATICALLY**

(30) Priority: 18.04.2006 CN 200610050386
(71) Applicant: Huang, Changguo, Huangyan Taizhou Zhejiang 317-200 (CN)
(72) Inventor: HUANG, Changguo, Zhejiang 317-200 (CN); HUANG, Lingyi, Zhejiang 317200 (CN)
(74) Representative: Chaillot, Geneviève
(86) International application number: PCT/CN2006/002994
(87) International publication number: WO 2007/118377

(57) **Abstract**

An adjusting distance device using a resilient lead screw automatically includes a pair of split semi-screws which have exterior screw threads resiliently retained in place inside a lead sleeve which have inner screw threads. When the resilient lead screw is in an open status, the threads of the split semi-screws will be in mesh with the threads of the lead sleeve. When the resilient lead screw is a closed status, the threads of the split semi-screws will not be in mesh with the threads of the lead sleeve, thus the lead screw can be rapidly pushed to its working position or retracted to adjust distance rapidly. The lead screw can be centered, engaged, split and self-locked automatically. This device has compact structure, can be used effectively, and can be fabricated relatively small in size. It can be used in vice or jack.

## Description

### BACKGROUND OF THE INVENTION

### 1. Field of the Invention

The present invention relates to a quick adjusting distance device for a machine.

### 2. Description of the Prior Art

As published in Chinese Patent No. ZL93104765.X, a quick and slow screw transmission mechanism comprises a supporting seat, semi-nuts, a sleeve, a screw, and a locking device. Each of the semi-nuts has a guiding surface at an external side and cam curved surfaces at lower and upper sections to control the engagement and disengagement of the semi-nuts and the screw. It provides a quick adjusting distance effect if this structure is applied to a screw device of a vice. The disengagement and engagement of the semi-nuts solve the problem that the screw is quickly positioned in the supporting seat of the vice. But, this structure takes up a lot of space and is more complicated because it uses the screw to advance.

### SUMMARY OF THE INVENTION

The present invention is to provide an adjusting distance device using a resilient lead screw automatically, with an adjusting distance revolving spindle instead of a screw to use a limited space inside a machine.

The present invention is to provide an adjusting distance device using a resilient lead screw automatically. The resilient lead screw is composed of a pair of split semi-screws having exterior threads resiliently retained inside a lead sleeve having inner threads. When the resilient lead screw is in an open status, the threads of the split semi-screws will be in mesh with the threads of the lead sleeve to advance. When the resilient lead screw is in a closed status, the threads of the split semi-screws will not be in mesh with the threads of the lead sleeve, thus the resilient lead screw can be move back and forth randomly inside the lead sleeve so as to adjust distance rapidly.

Preferably, each of the two semi-screws comprises a guiding post, the guiding post having a front edge cooperatively complementary to an engaging through of an engaging block. This arrangement enables the guiding post of each of the semi-screws to bring an open or closed motion via the action of the engaging trough of the engaging block.

Preferably, each of the two semi-screws is formed with a third spring hole to accommodate a third spring therein.

Preferably, each of the two semi-screws is formed a guiding pin notch to accommodate a guiding pin therein which is adapted to connect the two semi-screws together. This arrangement enables the resilient lead screw to be engaged automatically along an axial direction, enables the external threads of the two semi-threads to mesh with the inner threads of the lead sleeve, and prevents the resilient lead screw from displacement to damage the threads of the semi-screws and the lead sleeve.

Preferably, one end of each of the two semi-screws engages with a guiding trough of a fixing seat. This arrangement enables the semi-screws of the resilient lead screw to bring an open or closed motion along a straight side of the guiding trough.

Preferably, the fixing seat is fixedly connected to a tail end of an adjusting distance revolving spindle. This arrangement enables the resilient lead screw to bring an open or closed motion.

Preferably, the adjusting distance revolving spindle is connected with the engaging block, inserted through a through hole formed by semicircular troughs of the two semi-screws, and connected with the fixing seat. This arrangement is to support the engaging block, the semi-screws and the fixing seat, and enables the resilient lead screw to bring an open or closed motion.

Preferably, the lead sleeve and a movable guiding tube slide cooperatively, a front end of the movable guiding tube being formed with a first spring hole to accommodate a first spring and a first pushing rod therein, the first pushing rod having a front edge cooperatively complementary to a limiting hole. This arrangement is to confine the engaging block through the first spring and the first pushing rod.

Preferably, each of the semi-screw is formed with a second spring hole to accommodate a second spring and a second pushing rod therein, the second pushing rod having a front edge contact with a bottom surface of the fixing seat. This arrangement enables the fixing seat and the resilient lead screw to resiliently cooperate with each other so as to bring harmony motions.

Preferably, the fixing seat is formed with a circular pin hole to accommodate a circular pin which is adapted to secure the adjusting distance revolving spindle. This is a way to secure the adjusting distance revolving spindle and the fixing seat.

Preferably, the lead sleeve comprises a fixed board thereon and the movable guiding tube comprises a movable board thereon, a clamping opening being formed between the fixed board and the movable board.

This is a vice using the structure of the present invention.

Preferably, the movable guiding tube is formed with a key slot.

Preferably, the lead sleeve is formed with a fixing slot to secure a locating key therein, the locating key being to cooperate with the key slot. This arrangement is to confine the lead sleeve to bring a linear motion.

Preferably, the adjusting distance revolving spindle is connected with a handle and a handle rod. This arrangement is to control rotation of the resilient lead screw.

Preferably, the lead sleeve is disposed on a machine base.

This is the structure of the present invention applied to a vice.

The working process of the vice is:
choosing a clamping opening to an appropriate distance, rotating the handle rod, the fixing seat bringing the two semi-screws to open and linking the rotation of the engaging block, automatic engagement centrally, limiting self-locking of the two semi-screws and the engaging block, the clamping opening being narrowed gradually until clamping a working-piece tightly by means of the push of the adjusting distance revolving spindle;
rotating the handle rod in an opposite direction, the fixing seat bringing the two semi-screws to close and linking the engaging block to rotate in an opposite direction, retracting the limiting self-locking of the two semi-screws and the engaging block due to the limitation of the first spring and the first pushing rod, pushing the adjusting distance revolving spindle to a desired position inside the lead sleeve.

The lead screw can be centered, engaged, split and self-locked automatically. This device has compact structure, can be used effectively, and can be fabricated relatively small in size.

### BRIEF DESCRIPTION OF THE DRAWINGS

Fig. 1 is a cross-sectioned view of a preferred embodiment of the present invention applied to a vice;
Fig. 2 is a plane structural view of an engaging block of Fig. 1;
Fig. 3 is a cross-sectional view taken along line A-A of Fig. 2;
Fig. 4 is a plane structural view of a fixing seat of Fig. 1;
Fig. 5 is a cross-sectional view taken along line B-B of Fig. 4;
Fig. 6 is a plane structural view of two semi-screws of Fig. 1;
Fig. 7 is a cross-sectional view taken along line C-C of Fig. 6; and
Fig. 8 is a cross-sectional view taken along line D-D of Fig. 6.

### DETAILED DESCRIPTION OF THE PREFERRED EMBODIMENT

Embodiments of the present invention will now be described, by way of example only, with reference to the accompanying drawings.

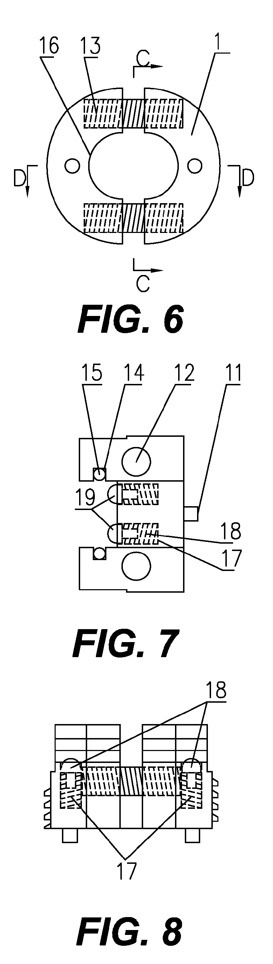

Referring to Figs. 6 through 8, the present invention is to provide an adjusting distance device using a resilient lead screw automatically. The resilient lead screw is composed of a pair of split semi-screws 1 having exterior threads resiliently retained inside a lead sleeve 2 having inner threads. When the resilient lead screw is in an open status, the threads of the split semi-screws 1 will be in mesh with the threads of the lead sleeve 2 to advance. When the resilient lead screw is in a closed status, the threads of the split semi-screws 1 will not be in mesh with the threads of the lead sleeve 2, thus the resilient lead screw can be move back and forth randomly inside the lead sleeve 2 so as to adjust distance rapidly.

Referring to Figs. 7, 2 and 3, each of the two semi-screws comprises a guiding post 11. The guiding post 11 has a front edge cooperatively complementary to an engaging through 31 of an engaging block 3. This arrangement enables the guiding post 11 of each of the semi-screws 1 to bring an open or closed motion via the action of the engaging trough 31 of the engaging block 3.

Referring to Fig. 6 through 8, each of the two semi-screws 1 is formed with a third spring hole 12 to accommodate a third spring 13 therein.

Each of the two semi-screws 1 is formed a guiding pin notch 14 to accommodate a guiding pin 15 therein which is adapted to connect the two semi-screws 1 together. This arrangement enables the resilient lead screw to be engaged automatically along an axial direction, enables the external threads of the two semi-threads 1 to mesh with the inner threads of the lead sleeve 2, and prevents the resilient lead screw from displacement to damage the threads of the semi-screws 1 and the lead sleeve 2.

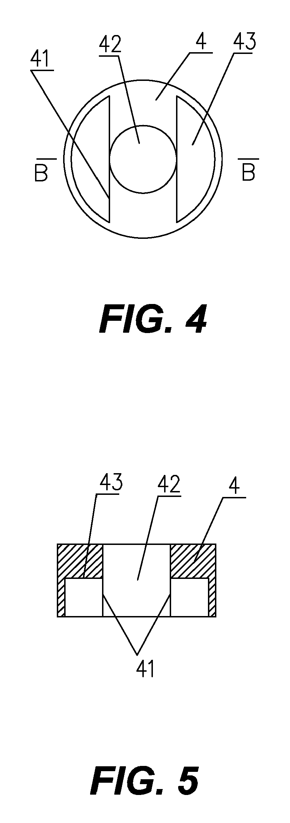

Referring to Figs. 4 and 5, one end of each of the two semi-screws 1 engages with a guiding trough 41 of a fixing seat 4. This arrangement enables the semi-screws 1 of the resilient lead screw to bring an open or closed motion along a straight side of the guiding trough 41.

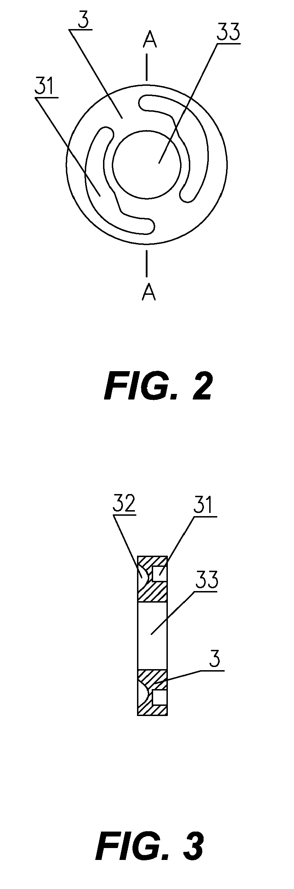

Referring to Figs. 3, 5 and 6, an adjusting distance revolving spindle 5 passes through a first through hole 33 of the engaging block 3, a second through hole defined by semicircular troughs 16 of the two semi-screws 1, and a third through hole 42 of the fixing seat 4. The tail of the adjusting distance revolving spindle 5 is fixed to the fixing seat 4. This arrangement is to support the engaging block 3, the semi-screws 1 and the fixing seat 4, and enables the resilient lead screw to bring an open or closed motion.

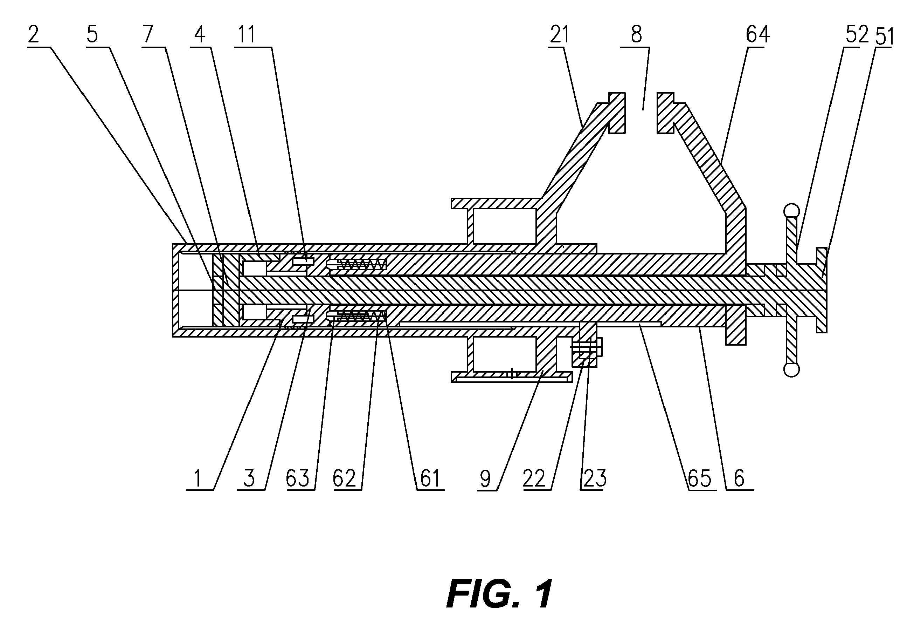

Referring to Figs. 1 and 3, the lead sleeve 2 and a movable guiding tube 6 slide cooperatively. A front end of the movable guiding tube 6 is formed with a first spring hole 61 to accommodate a first spring 62 and a first pushing rod 63 therein. The first pushing rod 63 has a front edge cooperatively complementary to a limiting hole 32. This arrangement is to confine the engaging block 3 through the first spring 62 and the first pushing rod 63.

Referring to Figs. 7, 4 and 5, each of the semi-screw 1 is formed with a second spring hole 17 to accommodate a second spring 18 and a second pushing rod 19 therein. The second pushing rod 19 has a front edge contact with a bottom surface 43 of the fixing seat 4. This arrangement enables the fixing seat 4 and the resilient lead screw to resiliently cooperate with each other so as to bring harmony motions.

Referring to Fig. 1, both the fixing seat 4 and the adjusting distance revolving spindle 5 are formed with a circular pin hole to accommodate a circular pin 7 which is adapted to secure the adjusting distance revolving spindle 5. This is a way to secure the adjusting distance revolving spindle 5 and the fixing seat 4.

The lead sleeve 2 comprises a fixed board 21 thereon, and the movable guiding tube 6 comprises a movable board 64 thereon. A clamping opening 8 is formed between the fixed board 21 and the movable board 64. This is a vice using the structure of the present invention.

The movable guiding tube 6 is formed with a key slot 65.

The lead sleeve 2 is formed with a fixing slot 22 to secure a locating key 23 therein. The locating key 23 is to cooperate with the key slot 65. This arrangement is to confine the lead sleeve 2 to bring a linear motion.

The adjusting distance revolving spindle 5 is connected with a handle 51 and a handle rod 52. This arrangement is to control rotation of the resilient lead screw.

The lead sleeve 2 is disposed on a machine base 9.

This is the structure of the present invention applied to a vice. It is may be used in a jack.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. An adjusting distance device using a resilient lead screw automatically, the resilient lead screw being composed of two split semi-screws having exterior threads resiliently retained inside a lead sleeve having inner threads.

2. The adjusting distance device using a resilient lead screw automatically as claimed in claim 1, wherein each of the two semi-screws comprises a guiding post, the guiding post having a front edge cooperatively complementary to an engaging through of an engaging block.

3. The adjusting distance device using a resilient lead screw automatically as claimed in claim 1, wherein each of the two semi-screws is formed with a third spring hole to accommodate a third spring therein.

4. The adjusting distance device using a resilient lead screw automatically as claimed in claim 1, wherein each of the two semi-screws is formed a guiding pin notch to accommodate a guiding pin therein which is adapted to connect the two semi-screws together.

5. The adjusting distance device using a resilient lead screw automatically as claimed in claim 1, wherein one end of each of the two semi-screws engages with a guiding trough of a fixing seat.

6. The adjusting distance device using a resilient lead screw automatically as claimed in claim 5, wherein the fixing seat is fixedly connected to a tail end of an adjusting distance revolving spindle.

7. The adjusting distance device using a resilient lead screw automatically as claimed in claim 6, wherein the adjusting distance revolving spindle is connected with the engaging block, inserted through a through hole formed by semicircular troughs of the two semi-screws, and connected with the fixing seat.

8. The adjusting distance device using a resilient lead screw automatically as claimed in claim 1, wherein the lead sleeve and a movable guiding tube slide cooperatively, a front end of the movable guiding tube being formed with a first spring hole to accommodate a first spring and a first pushing rod therein, the first pushing rod having a front edge cooperatively complementary to a limiting hole.

9. The adjusting distance device using a resilient lead screw automatically as claimed in claim 1, wherein each of the semi-screw is formed with a second spring hole to accommodate a second spring and a second pushing rod therein, the second pushing rod having a front edge contact with a bottom surface of the fixing seat.

10. The adjusting distance device using a resilient lead screw automatically as claimed in claim 6, wherein the fixing seat is formed with a circular pin hole to accommodate a circular pin which is adapted to secure the adjusting distance revolving spindle.
